(19) **Europäisches Patentamt / European Patent Office / Office européen des brevets**

(11) **EP 3 915 872 B1**

(12) # FASCICULE DE BREVET EUROPEEN

(45) Date de publication et mention de la délivrance du brevet:
**09.08.2023 Bulletin 2023/32**

(21) Numéro de dépôt: **21161720.4**

(22) Date de dépôt: **10.03.2021**

(51) Classification Internationale des Brevets (IPC):
**B64C 13/28** (2006.01)    **B64C 13/34** (2006.01)
**F16D 9/00** (2006.01)    **F16D 9/10** (2006.01)
**F16D 9/06** (2006.01)    **B64C 27/56** (2006.01)

(52) Classification Coopérative des Brevets (CPC):
**B64C 27/68; B64C 13/505; F16D 9/06;** F16F 9/145;
F16F 2222/12; F16F 2230/0023; F16F 2232/02

(54) **ACTIONNEUR MUNI D'UN SYSTEME FUSIBLE A AMORTISSEMENT FLUIDIQUE ET UN VEHICULE MUNI DE CET ACTIONNEUR**

STELLGLIED MIT EINEM FLÜSSIGKEITSGEDÄMPFTEN SICHERUNGSSYSTEM UND FAHRZEUG, DAS DIESES STELLGLIED UMFASST

ACTUATOR PROVIDED WITH A FUSE SYSTEM WITH FLUID DAMPING AND VEHICLE PROVIDED WITH SAID ACTUATOR

(72) Inventeur: **NEVERS, Romain**
**13330 PELISSANNE (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.05.2020 FR 2005674**

(43) Date de publication de la demande:
**01.12.2021 Bulletin 2021/48**

(73) Titulaire: **Airbus Helicopters**
**13725 Marignane Cedex (FR)**

(56) Documents cités:
EP-A1- 1 506 354    EP-A1- 2 266 878
EP-A1- 3 702 278    FR-A1- 2 931 131

EP 3 915 872 B1

**Description**

La présente invention concerne un actionneur muni d'un système fusible à amortissement fluidique et un véhicule muni de cet actionneur. Le document FR 2 931 131 A1 présente un état de la technique

En effet, un aéronef, et plus particulièrement un hélicoptère, peut comporter des actionneurs agencés en parallèle ou en série au regard des chaînes de commandes de vol. Les actionneurs agencés en parallèle d'une chaîne de commande de vol sont usuellement dénommés « vérins de trim » par l'homme du métier et « actionneurs de trim » par la suite.

Par exemple, l'aéronef comporte une commande de vol, manoeuvrable par un pilote, qui est reliée par une chaîne mécanique de commande de vol à un organe de pilotage de l'aéronef. Un organe de pilotage d'un aéronef peut comprendre une pale d'un rotor de sustentation ou une pale d'un rotor de contrôle du mouvement en lacet ou un volet ou équivalent par exemple. Dès lors, au moins un vérin série peut être intégré à la chaîne mécanique de commande de vol et un actionneur de trim peut être relié à la chaîne mécanique de commande de vol.

Par exemple, un actionneur de trim comporte un moteur muni d'un rotor et d'un stator, le rotor étant relié à un levier de sortie en prise sur la chaîne mécanique de commande de vol.

Lorsque le moteur est sollicité, le levier de sortie effectue une rotation et déplace au moins un organe de la chaîne mécanique de commande de vol.

Si un pilote manoeuvre la commande de vol, la chaîne mécanique de commande de vol entraîne en outre en rotation le levier de sortie. Dans des conditions normales, l'actionneur de trim ne bloque pas la chaîne mécanique de commande de vol, le rotor du moteur effectuant par exemple une rotation par rapport au stator de ce moteur.

Toutefois, si un actionneur de trim se bloque, toute la chaîne mécanique de commande de vol peut être immobilisée.

Pour éviter qu'un blocage d'un actionneur de trim bloque la chaîne mécanique de commande de vol associée, un actionneur de trim peut comprendre un système de désaccouplement pour être désolidarisé de cette chaîne mécanique de commande de vol si nécessaire.

Un tel système de désaccouplement peut comprendre un système fusible dimensionné pour rompre lorsque l'actionneur de trim est bloqué et lorsque le pilote applique un effort volontairement important sur la commande de vol.

Selon un exemple, un actionneur de trim peut comporter un moteur entrainant en rotation un arbre de sortie via une chaîne mécanique de transmission de puissance interne. Cet arbre de sortie est rendu, dans des conditions normales, solidaire en rotation d'un levier de sortie par une goupille fusible. Le levier de sortie est relié mécaniquement à la chaîne mécanique de commande de vol associée. En fonctionnement normal, la goupille permet de transmettre un couple mécanique entre le levier de sortie et le moteur. Par contre, en cas de blocage de l'actionneur de trim suite à une défaillance interne de cet actionneur de trim, le pilote ressent physiquement que la chaîne mécanique de commande de vol est bloquée. Le pilote augmente alors l'effort qu'il exerce sur la commande de vol. Lorsque le seuil de rupture de la goupille est atteint, l'action du pilote sur la commande de vol génère une rupture en cisaillement de la goupille. Dans cette nouvelle configuration, le levier de sortie est alors libre en rotation par rapport à l'arbre de sortie bloqué. Le pilote peut donc à nouveau mettre en mouvement la chaîne mécanique de commande de vol.

Bien que satisfaisante, cette solution nécessite un dimensionnement délicat de la goupille afin que son seuil de rupture ne soit ni trop faible pour garantir la résistance mécanique de la goupille pour tout le domaine de vol, ni trop élevée pour que tout pilote, quelle que soit sa force physique, puisse produire les efforts nécessaires pour la rompre.

L'effort à exercer par le pilote pour rompre la goupille doit donc être relativement important. Par suite, la rupture de la goupille intervient subitement. Dès lors, au moment de cette rupture, la chaîne mécanique de commande de vol tend alors à se déplacer rapidement et peut atteindre des butées. A titre d'exemple, le levier de sortie peut alors se déplacer approximativement à une vitesse de 300 degrés par seconde. Le déplacement rapide de la chaîne mécanique de commande de vol sur la totalité de son amplitude peut occasionner des dégâts.

Pour y remédier, le document FR 2931131 décrit un actionneur de trim ayant un dispositif d'accouplement escamotable. Ce dispositif d'accouplement est pourvu d'un moyen de blocage ainsi que d'un moyen de compression et d'au moins un moyen d'entraînement, par exemple une bille. Dans une configuration normale, chaque bille lie en rotation le moyen de blocage et le moyen de compression. A cet effet, le moyen de blocage est pourvu d'un premier logement discontinu accueillant ledit moyen d'entraînement en dessous d'un seuil de couple mécanique. De plus, le moyen de blocage comporte un deuxième logement continu de type gorge décrivant une boucle fermée. Le dispositif d'accouplement est muni d'un moyen de déplacement déplaçant de manière irréversible, sans intervention humaine, chaque bille du premier logement vers ledit deuxième logement lorsque le couple mécanique exercé sur les billes est supérieur audit couple prédéterminé. Les billes roulent alors dans la gorge sans transmettre un couple mécanique.

Ce document FR 2931131 présente un système de type limiteur de couple intéressant. Par contre, après un blocage, ce système nécessite une intervention humaine pour replacer les billes dans le premier logement.

Une autre solution consiste à utiliser un système électromagnétique muni d'une bobine électrique. Un tel système est intéressant, mais présente un poids et un encombrement importants.

Le document FR 3008457 et le document US 2010/0203974 sont aussi connus.

Le document FR 3008457 décrit un mécanisme d'accouplement entre un organe de commande générateur de commandes de vol manuelles et un actionneur de trim équipant une chaîne mécanique de commande de vol d'un aéronef. Le mécanisme d'accouplement comprend des moyens de brochage axial entre un bras de levier mécaniquement lié à l'organe de commande et un arbre pivotant de l'actionneur de trim.

Le document US 2010/0203974 décrit un dispositif d'entraînement motorisé à broche comprenant un accouplement qui se désengage lors d'un dépassement par le haut d'un seuil de couple mécanique prédéfini.

Les documents EP 1 506 354, EP 2 266 878, EP 3 702 278 sont aussi connus.

La présente invention a alors pour objet de proposer un actionneur innovant muni d'une connexion fusible permettant de limiter la vitesse de déplacement d'une chaîne mécanique de transmission d'un mouvement suite à la rupture de l'organe fusible.

Ainsi, l'invention vise un actionneur muni d'un moteur configuré pour mettre en mouvement un arrangement de sortie de l'actionneur, ledit actionneur comprenant un levier de sortie, ledit actionneur comprenant une connexion fusible liant en rotation autour d'un axe de rotation ledit arrangement de sortie et ledit levier de sortie jusqu'à un seuil de couple mécanique.

L'arrangement de sortie et le moteur peuvent coopérer l'un avec l'autre de manière usuelle au sein d'un actionneur de trim par exemple.

Cet actionneur comporte un dispositif d'amortissement fluidique logé entre le levier de sortie et l'arrangement de sortie pour amortir une rotation autour dudit axe de rotation dudit levier de sortie par rapport à l'arrangement de sortie suite à une rupture de ladite connexion fusible.

L'expression « arrangement de sortie » désigne un dispositif ayant soit uniquement un arbre de sortie dénommé parfois « axe » intégré au moteur ou relié via une chaîne mécanique interne au moteur, soit un assemblage comprenant un tel arbre de sortie. Un tel assemblage peut comprendre par exemple un tel arbre de sortie et un support disposé autour de l'arbre de sortie et solidaire au moins en rotation de cet arbre de sortie.

Dès lors, dans une configuration non accidentelle, l'arrangement de sortie et le levier de sortie sont conjointement mobiles en rotation autour de l'axe de rotation via la connexion fusible.

Par contre, dans une configuration dégradée durant laquelle le moteur et / ou la chaîne mécanique interne de transmission éventuelle sont bloqués, l'arrangement de sortie devient immobilisé en rotation par rapport à l'axe de rotation. En augmentant l'effort exercé sur le levier de sortie, la connexion fusible peut être rompue par un individu.

Au sein d'un actionneur classique, le levier de sortie se déplace alors très rapidement. A l'inverse, l'invention prévoit un dispositif d'amortissement fluidique entre le levier de sortie et l'arrangement de sortie. Ce dispositif d'amortissement fluidique permet de limiter fluidiquement la vitesse de déplacement du levier de sortie suite à la rupture de la connexion fusible, par exemple sensiblement d'un facteur trois par rapport à un état de la technique. La connexion fusible et le dispositif d'amortissement fluidique forment conjointement un système fusible à amortissement fluidique.

Au sein d'un système de commande de vol d'un aéronef, ce dispositif d'amortissement fluidique peut permettre d'éviter d'atteindre des butées suite à la rupture de la connexion fusible. Le dispositif d'amortissement fluidique peut tendre à limiter les effets de la rupture de la connexion fusible sur le système de commande de vol.

Cet actionneur s'avère en outre relativement simple, l'impact massique ou financier du dispositif d'amortissement fluidique étant modéré.

L'actionneur selon l'invention peut comprendre une ou plusieurs des caractéristiques qui suivent, prises seules ou en combinaison.

Selon un aspect, l'actionneur peut comporter une chambre étanche remplie par un fluide dudit dispositif d'amortissement fluidique, ladite chambre s'étendant radialement au regard de l'axe de rotation entre l'arrangement de sortie et une paroi d'un logement du levier de sortie.

Le dispositif d'amortissement fluidique comporte ainsi un fluide disposé dans une chambre ménagée dans le levier de sortie. Dans la configuration dégradée, le dispositif d'amortissement fluidique est configuré pour générer un effort, proportionnel à une vitesse de déplacement du fluide dans la chambre, qui s'oppose au mouvement du levier de sortie par rapport à l'arrangement de sortie.

Selon un aspect, le fluide est un liquide.

Selon un aspect, le fluide est un fluide visqueux. Par exemple, le fluide est de l'huile.

Selon un aspect compatible avec les précédents, le dispositif d'amortissement fluidique peut comporter au moins une palette fixe solidaire en rotation de l'arrangement de sortie et au moins une palette mobile solidaire en rotation dudit logement, ladite au moins une palette fixe et ladite au moins une palette mobile étant agencées dans ladite chambre et baignant dans ledit fluide.

Chaque palette solidarisée à l'arrangement de sortie est qualifiée de « fixe » en raison de son immobilisation dans la configuration dégradée, à l'inverse de chaque palette solidaire du levier. Cette convention est utilisée par la suite pour différencier les extrémités des palettes.

La ou les palettes mobiles permettent de mettre en mouvement le fluide dans la chambre lors d'un mouvement rotatif relatif entre le levier de sortie et l'arrangement de sortie.

Selon un aspect, ladite au moins une palette fixe peut être disposée dans une fente dudit arrangement de sortie.

Selon la réalisation, une palette fixe peut être emmanchée dans une fente de l'arrangement de sortie pour être solidarisée à cet arrangement de sortie.

Selon un aspect compatible avec les précédents, ladite au moins une palette fixe et/ou ladite au moins une palette mobile comporte au moins une ouverture la traversant de part en part, ledit fluide traversant ladite au moins une ouverture lors d'une rotation du levier de sortie relativement à l'arrangement de sortie.

L'expression « ladite au moins une palette fixe et/ou ladite au moins une palette mobile comporte au moins une ouverture » signifie que, selon la variante, la ou les palettes mobiles et/ou la ou les palettes fixes comprennent au moins une ouverture. Ainsi, trois configurations sont possibles : au moins une palette mobile, voire chaque palette mobile, comporte au moins une ouverture et aucune palette fixe ne comporte une ouverture ; ou au moins une palette fixe, voire chaque palette, fixe comporte au moins une ouverture et aucune palette mobile ne comporte une ouverture ; au moins une palette fixe comporte au moins une ouverture et au moins une palette mobile comporte au moins une ouverture.

Le passage du fluide au sein de la ou des ouvertures permet de générer une perte de charge à l'origine de la création d'une force d'amortissement voulue par laminage.

Selon un aspect compatible avec les précédents, ladite au moins une ouverture peut traverser de part en part ladite au moins une palette mobile ou ladite au moins une palette fixe selon une direction tangente à un cercle centré sur l'axe de rotation.

Selon un aspect compatible avec les précédents, ladite au moins une ouverture peut comprendre une section qui s'étend radialement au regard dudit axe de rotation.

Selon un aspect compatible avec les précédents, ladite au moins une palette fixe peut s'étendre de l'arrangement de sortie jusqu'à une extrémité libre fixe séparée de ladite paroi du logement par un premier jeu radial, ladite au moins une palette mobile s'étend de ladite paroi jusqu'à une extrémité libre mobile séparée de l'arrangement de sortie par un deuxième jeu radial.

Selon un aspect compatible avec les précédents, le dispositif d'amortissement fluidique peut comporter au moins deux dites palettes fixes et au moins deux dites palettes mobiles, voire uniquement deux palettes mobiles et deux palettes fixes, chaque palette mobile étant en azimut agencée entre deux palettes fixes et chaque palette fixe étant agencée en azimut entre deux palettes mobiles au regard dudit axe de rotation.

Le nombre de palette fixe et mobile et d'ouverture ainsi que leur positionnement peuvent notamment être déterminés pour garantir qu'aucune palette mobile ne sera bloquée par une palette fixe.

Selon un aspect compatible avec les précédents, ledit logement peut comporter un moyeu fermé par un couvercle.

Le moyeu et le couvercle peuvent coopérer entre eux pour délimiter la chambre, à savoir pour former des cloisons entourant la chambre. Un isolant fluidique, tel qu'un joint par exemple, peut être disposé entre le logement et le couvercle.

Selon un aspect compatible avec les précédents, ledit levier de sortie peut comporter au moins un bras solidaire dudit logement.

Le levier de sortie peut comprendre un ou plusieurs bras pour être relié à une chaîne mécanique, par exemple de commande de vol, ou à une bielle par une liaison à au moins un degré de mobilité en rotation telle une liaison de type pivot ou une liaison de type rotule par exemple. A cet effet, le bras peut s'étendre du logement jusqu'à un tronçon d'extrémité comprenant un trou apte à coopérer avec une telle liaison de type pivot ou rotule par exemple.

Selon un aspect compatible avec les précédents, ladite connexion fusible peut comporter une goupille fusible insérée dans un premier passage dudit arrangement de sortie, ladite goupille étant insérée dans un deuxième passage dudit logement. Par exemple, ladite goupille peut s'étendre parallèlement à l'axe de rotation, ou peut s'étendre selon d'autres directions.

Par exemple, l'arrangement de sortie comporte une plaque orthogonale à l'axe de rotation liée en rotation par la goupille au levier de sortie.

Outre un actionneur, l'invention concerne un véhicule muni d'un tel actionneur.

Par exemple, l'actionneur est relié à une chaîne mécanique de commande de vol qui s'étend d'une commande de vol manoeuvrable par un pilote jusqu'à un organe de pilotage du véhicule, un mouvement de l'organe de pilotage sous l'impulsion de la commande de vol engendrant un mouvement du véhicule.

L'invention et ses avantages apparaîtront avec plus de détails dans le cadre de la description qui suit avec des exemples donnés à titre illustratif en référence aux figures annexées qui représentent :

la figure 1, un schéma illustrant un actionneur selon l'invention coopérant avec un système mécanique,

la figure 2, une vue en trois dimensions d'un actionneur selon l'invention,

la figure 3, une coupe partielle de l'actionneur de la figure 2,

la figure 4, un schéma illustrant le fonctionnement d'un actionneur selon l'invention, et

la figure 5, un diagramme illustrant le fonctionnement d'un actionneur selon l'invention.

Les éléments présents dans plusieurs figures distinctes sont affectés d'une seule et même référence.

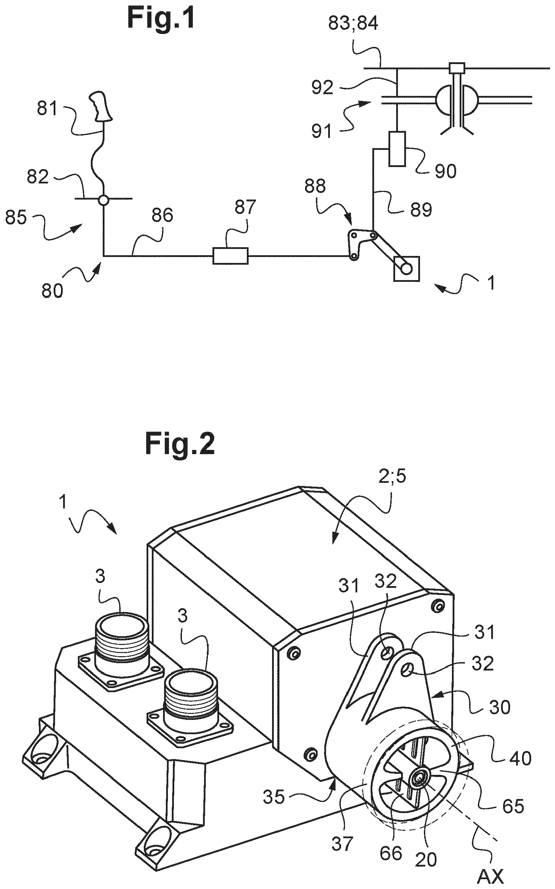

La figure 1 présente un actionneur 1 selon l'invention agencé au sein d'un système mécanique.

Par exemple, l'actionneur 1 est agencé au sein d'un système mécanique d'un véhicule 80 entre une commande et un organe de pilotage du véhicule 80.

Selon l'exemple particulier de la figure 1, le véhicule 80 est un aéronef qui comprend une commande de vol 81. Selon cet exemple, la commande de vol 81 comprend un manche mobile par rapport à un plancher 82. La commande de vol 81 est utilisée pour commander un organe de pilotage 83 de type pale 84 éventuellement via une architecture de commande comprenant un actionneur 1 selon l'invention.

A titre illustratif, la commande de vol 81 est reliée par une chaîne 85 de transmission d'un ordre à l'organe de pilotage 83. Cette chaîne 85 peut être une chaîne mécanique de commande de vol qui comporte par exemple au moins une première bielle 86 liant la commande de vol 81 à un actionneur série 87 débouchant sur un « guignol » 88. Ce guignol 88 est relié mécaniquement à une servocommande 90 par au moins une deuxième bielle 89. En outre, la servocommande 90 est fixée à un plateau non tournant d'un ensemble 91 de plateaux cycliques, le plateau tournant de cet ensemble 91 de plateaux cycliques étant relié aux pales 84 par des bielles de pas 92 respectives. Dès lors, l'actionneur 1 selon l'invention peut être un actionneur de trim agencé en parallèle de la chaîne 85 de transmission d'un ordre, en étant par exemple lié à une branche du guignol 88, soit directement soit via au moins une bielle.

Bien que la figure 1 présente un actionneur 1 selon l'invention agencé au sein d'un système de commande de vol, un tel actionneur 1 peut être agencé au sein de systèmes divers sans sortir du cadre de l'invention, par exemple, au sein d'un autre type de véhicule, au sein d'une chaîne d'assemblage, d'une usine, et plus généralement au sein de tout système nécessitant un actionneur à section fusible.

Quel que soit l'agencement de l'actionneur 1, la figure 2 illustre un tel actionneur 1 selon l'invention de type rotatif.

Cet actionneur 1 est muni d'un moteur 5 configuré pour mettre en en mouvement, un levier de sortie 30 via un arrangement de sortie 20, notamment en rotation autour d'un axe de rotation AX selon l'exemple illustré. De plus, le levier de sortie 30 peut comprendre un organe pour être lié à une chaîne mécanique. Ainsi le levier de sortie 30 peut comprendre au moins un bras 31 qui s'étend à partir d'un logement 35 selon une direction l'éloignant de l'arrangement de sortie 20. Chaque bras 31 peut comprendre un tronçon d'extrémité comprenant un trou 32 apte à coopérer avec un élément d'une liaison de type pivot ou d'une liaison de type rotule.

Par exemple, le moteur 5 est logé dans un boîtier 2. L'arrangement de sortie 20 peut s'étendre de l'intérieur du boîtier 2 jusqu'à l'extérieur du boîtier 2, le levier de sortie 30 étant disposé au moins partiellement à l'extérieur du boîtier 2. De plus, l'actionneur 1 peut comporter au moins un connecteur électrique 3 situé au moins partiellement en dehors du boîtier 2, au moins un connecteur électrique 3 étant relié au moteur 5. L'actionneur 1 peut de plus comprendre au moins un capteur usuel, non représenté pour ne pas alourdir inutilement les figures.

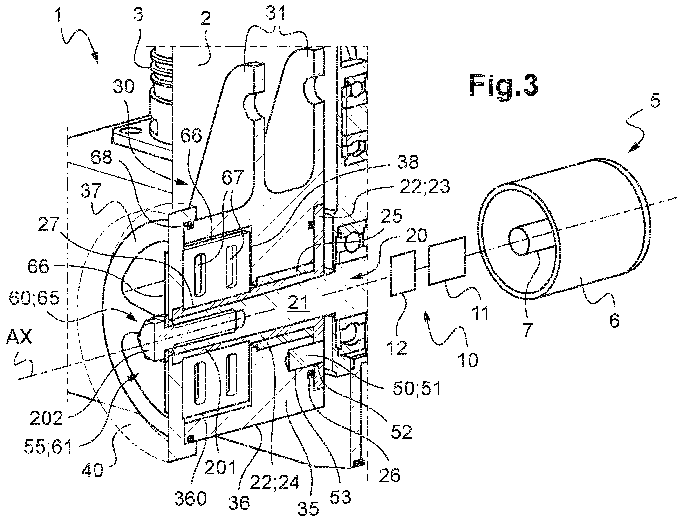

La figure 3 présente une coupe du levier de sortie 30 et de l'arrangement de sortie 20, certains organes de l'actionneur 1 usuel étant représentés schématiquement.

Ainsi, le moteur 5 peut être par exemple un moteur électrique comprenant un stator 6 et un rotor 7. Le rotor 7 est relié mécaniquement à l'arrangement de sortie 20.

Par exemple, l'arrangement de sortie 20 peut comprendre un arbre de sortie 21. Par suite, l'arbre de sortie 21 peut sortir du moteur 5 et être solidaire du rotor 7 voire peut être une partie constituante du rotor 7. Alternativement, l'actionneur 1 comporte une chaîne mécanique 10 liant le moteur 5, et par exemple le rotor 7, à l'arbre de sortie 21 de l'arrangement de sortie 20. Par exemple, une telle chaîne mécanique 10 peut comprendre au moins un engrenage 11, éventuellement au sein d'un système de réduction de vitesse de rotation, au moins un organe ressort 12 permettant de générer une loi d'effort, au moins un capteur sans sortir du cadre de l'invention...

Dès lors, le moteur 5 est configuré pour mettre en rotation l'arrangement de sortie 20 autour de l'axe de rotation AX.

Par ailleurs, l'actionneur 1 comporte une connexion fusible 50 solidarisant en rotation, autour de l'axe de rotation AX, l'arrangement de sortie 20 et le levier de sortie 30 dans des conditions normales de fonctionnement. Tant qu'un couple inférieur à un seuil de couple mécanique est exercé sur le levier de sortie 30, la connexion fusible 50 remplit son rôle et solidarise en rotation, autour de l'axe de rotation AX, l'arrangement de sortie 20 et le levier de sortie 30. Par contre, lorsque le seuil de couple mécanique est atteint, la connexion fusible 50 rompt et désolidarise en rotation, autour de l'axe de rotation AX, l'arrangement de sortie 20 et le levier de sortie 30.

Selon l'exemple illustré, la connexion fusible 50 comporte une goupille 51 fusible. La goupille 51 s'étend à la fois dans un premier passage 52 de l'arrangement de sortie 20 et dans un deuxième passage 53 du levier de sortie 30.

Selon l'exemple illustré, l'arrangement de sortie 20 peut comprendre l'arbre de sortie 21 évoqué précédemment mais aussi un support 22 disposé autour de l'arbre de sortie 21. Le support 22 est par exemple solidarisé en rotation à l'arbre de sortie 21 via des organes usuels, des cannelures par exemple. Par exemple, le support 22 comporte un disque 23 comprenant le premier passage 52. Par exemple, ce disque 23 est disposé sensiblement orthogonalement à l'axe de rotation AX. Dès lors, le premier passage 52 et le deuxième passage 53 ainsi que la goupille 51 peuvent comprendre un même axe de symétrie de révolution parallèle à l'axe de rotation AX. En position, la goupille 51 est alors selon cet exemple parallèle à l'axe de rotation AX.

Eventuellement, le disque 23 peut être solidaire d'un cylindre 24 du support 22, la section transversale du support 22 ayant globalement une forme de T. Le disque 23 est alors positionné axialement selon l'axe de rotation AX entre le cylindre 24 et le moteur 5 par exemple.

Alternativement, l'arbre de sortie 21 peut comporter un épaulement muni du premier passage 52 ou tout autre système capable de coopérer avec la goupille 51.

Quelle que soit la variante, le levier de sortie 30 et l'arrangement de sortie 20 sont rendus solidaires en rotation autour de l'axe de rotation AX par la connexion fusible 50, dans des conditions normales de fonctionnement.

Selon un autre aspect, l'actionneur 1 comporte un dispositif d'amortissement fluidique 60 sollicité en dehors de ces conditions normales de fonctionnement.

Ce dispositif d'amortissement fluidique 60 coopère avec le levier de sortie 30 et l'arrangement de sortie 20 pour amortir une rotation, autour de l'axe de rotation AX, du levier de sortie 30 par rapport à l'arrangement de sortie 20 suite à une rupture de ladite connexion fusible 50.

Ce dispositif d'amortissement fluidique 60 peut être logé entre le levier de sortie 30 et l'arrangement de sortie 20.

Par exemple, le dispositif d'amortissement fluidique 60 peut comporter un fluide 61 agencé dans une chambre 55 étanche présente entre le levier de sortie 30 et l'arrangement de sortie 20. En particulier, la chambre 55 peut être logée radialement, à savoir au regard de l'axe de rotation AX, entre une paroi 37 du levier de sortie 30 et l'arrangement de sortie 20, à savoir l'arbre de sortie 21 ou le support 22 suivant la réalisation. Ce fluide peut être liquide et/ou visqueux.

A cet effet, le levier de sortie 30 peut comporter un logement 35 dans lequel se trouve la chambre 55. Ce logement 35 est muni de la paroi 37 qui entoure localement l'arrangement de sortie 20 et la chambre 55.

Le logement 35 peut comprendre un moyeu 36 creux enfilé sur l'arrangement de sortie 20. Chaque bras 31 éventuel s'étend alors à partir du moyeu 36.

En outre, le moyeu 36 comporte un fond 38 en forme d'anneau traversé par l'arrangement de sortie 20, à savoir par l'arbre de sortie 21 et le cas échéant le cylindre 24 du support 22. Ce fond 38 peut comprendre le deuxième passage 53. Pour rendre étanche la chambre 55, un joint de fond 26 est disposé entre le fond 38 et l'arrangement de sortie 20, en l'occurrence entre le fond 38 et le disque 23 du support 22 selon l'exemple illustré. L'axe de rotation AX peut être un axe de symétrie du joint de fond 26. Un palier 25 peut être disposé radialement entre le fond 38 et l'arrangement de sortie 20, à savoir entre le fond 38 et l'arbre de sortie 21 ou le cas échéant entre le fond 38 et le cylindre 24 du support 22.

En outre, le moyeu 36 comprend un cylindre 360 formé par la paroi 37. La paroi 37 s'étend selon l'axe de rotation AX du fond 38, selon un sens allant vers une extrémité libre 201 de l'arrangement de sortie 20. La paroi 37 peut alors atteindre un couvercle 40. Le couvercle 40 est rendu transparent sur la figure 3 et la figure 2. Un joint de couvercle 68 peut être disposé entre le couvercle 40 et le moyeu 36. Le couvercle 40 peut selon l'exemple illustré être traversé par un boulon 202 vissé dans l'extrémité libre 201 de l'arrangement de sortie 20, et en l'occurrence de l'arbre de sortie 21. Eventuellement, le couvercle 40 peut présenter un degré de liberté en rotation, autour de l'axe de rotation AX, par rapport au moyeu 36 ou à l'arrangement de sortie 20.

Par suite, la chambre 55 est rendue étanche au moins hydrauliquement par le joint de fond 26 et le joint de couvercle 68 notamment. De plus, la chambre 55 s'étend, au regard de l'axe de rotation AX, radialement entre l'arrangement de sortie 20 et la paroi 37 du levier de sortie 30 et axialement entre le couvercle 40 et le fond 38 voir aussi le palier 25.

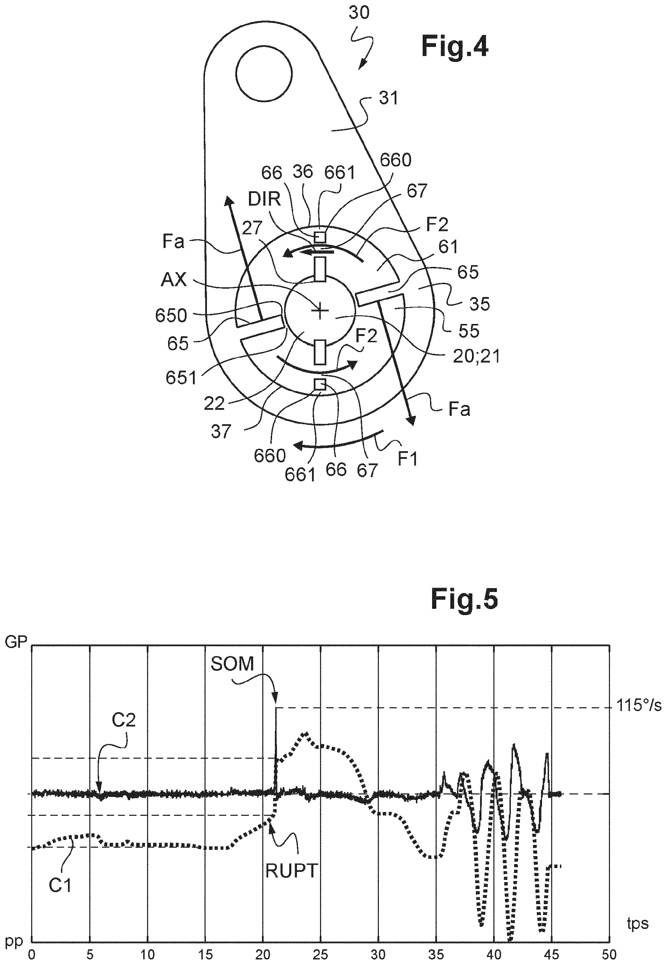

Selon un autre aspect, le dispositif d'amortissement fluidique 60 peut comporter au moins une palette fixe 66 solidaire en rotation de l'arrangement de sortie 20, quel que soit l'état de la connexion fusible 50. Chaque palette fixe 66 est agencée dans la chambre 55 et baigne dans le fluide 61. Au moins une palette fixe 66 est par exemple positionnée dans une fente 27 de l'arrangement de sortie 20, à savoir par exemple une fente 27 de l'arbre de sortie 21 et/ou du support 22 le cas échéant. Au moins une palette fixe 66 peut s'étendre sensiblement radialement au regard de l'axe de rotation AX. Par ailleurs, comme illustré sur la figure 4 au moins une palette fixe 66 peut s'étendre de l'arrangement de sortie 20 jusqu'à une extrémité libre fixe 660 séparée de ladite paroi 37 du logement 35 par un premier jeu radial 661. Le premier jeu radial 661 peut être minimisé et peut simplement viser à éviter un contact entre une palette fixe 66 et le levier de sortie 30 pour éviter un blocage.

De plus, le dispositif d'amortissement fluidique 60 peut comporter au moins une palette mobile 65 solidaire en rotation du logement 35. Chaque palette mobile 65 est agencée dans la chambre 55 et baigne dans le fluide 61. Par exemple, chaque palette mobile 65 et le moyeu du logement 35, voire le fond 38 et le ou les bras 31, forment une seule pièce monolithique. Au moins une palette mobile 65 peut s'étendre sensiblement radialement au regard de l'axe de rotation AX. Au moins une palette mobile 65 peut s'étendre de la paroi 36 jusqu'à une extrémité libre mobile 650 séparée de l'arrangement de sortie 20 par un deuxième jeu radial 651. Le deuxième jeu radial 651 peut être minimisé et peut simplement viser à éviter un contact entre une palette mobile 65 et l'arrangement de sortie 20 pour éviter un blocage.

De même, un premier jeu axial et un deuxième jeu axial peuvent séparer axialement chaque palette, fixe 66 et mobile 65, respectivement du fond 38 et du couvercle 40.

En présence de plusieurs palettes fixes 66 et mobiles 65 et par exemple en présence de deux palettes fixes 66 et deux palettes mobiles 65, chaque palette mobile 65 peut être agencée en azimut, à savoir circonférentiellement autour de l'axe de rotation AX, entre deux palettes fixes 66. De même, chaque palette fixe 66 peut être agencée en azimut entre deux palettes mobiles 65 au regard dudit axe de rotation AX.

En présence d'un nombre pair de palettes fixes 66, les palettes fixes 66 peuvent être agencées par paire, deux palettes fixes 66 d'une même paire étant par exemple diamétralement opposées au regard de l'axe de rotation AX. De même, en présence d'un nombre pair de palettes mobiles 65, les palettes mobiles 65 peuvent être agencées par paire, deux palettes mobiles 65 d'une même paire étant diamétralement opposées au regard de l'axe de rotation AX.

Par ailleurs, au moins une palette fixe 66 et/ou au moins une palette mobile 65 peuvent comporter au moins une ouverture 67 la traversant de part en part. Selon un exemple non illustré, toutes les palettes fixes 66 ont au moins une ouverture 67, et en l'occurrence deux ouvertures 67, les palettes mobiles 65 étant pleines et donc dépourvues d'ouverture. Selon un autre exemple illustré, toutes les palettes mobiles 65 ont au moins une ouverture 67, et par exemple deux ouvertures 67, les palettes fixes 66 étant pleines et donc dépourvues d'ouverture. Il est aussi envisageable d'avoir un mixte de ces deux configurations.

Chaque ouverture 67 peut présenter une surface de passage au regard du fluide 61 supérieure à la surface de passage obtenue au niveau de chaque premier jeu radial et / ou deuxième jeu radial et/ou premier jeu axial et/ou deuxième jeux axial.

Chaque ouverture 67 peut comprendre une section qui s'étend radialement au regard dudit axe de rotation AX. Par exemple, chaque ouverture 67 peut avoir un axe de symétrie axiale qui s'étend radialement au regard dudit axe de rotation AX.

Par ailleurs, et en référence à la figure 4, chaque ouverture 67 traverse de part en part la palette associée, par exemple selon une direction DIR tangente à un cercle centré sur l'axe de rotation AX.

Par suite, lors d'une phase de fonctionnement normale, l'arrangement de sortie 20 et le levier de sortie 30 sont solidarisés l'un à l'autre en rotation autour de l'axe de rotation AX par la connexion fusible 50.

En cas de blocage interne de l'actionneur 1, l'arrangement de sortie 20 est immobilisé. Un effort exercé sur le levier de sortie 30 peut faire rompre la connexion fusible 50. Le levier de sortie 30 effectue alors une rotation selon la flèche F1 par rapport à l'arrangement de sortie 20. La ou les palettes mobiles 65 mettent en circulation le fluide 61 dans la chambre 55. Le cas échéant, le fluide 61 traverse alors les diverses ouvertures 67 selon les flèches F2. Lorsque le fluide traverse chaque ouverture 67, il en résulte une perte de charge qui est fonction de la moitié de la masse volumique P du fluide multipliée par un terme à la puissance deux, ce terme étant égal au débit Q du fluide au travers de l'ouverture divisé par un coefficient A de perte de charge fois la section A0 de l'ouverture soit :

$$dp=(P/2)*(Q/(A*A0))²$$

où « / » représente le signe de la division et « * » représente le signe de la multiplication

Le débit Q est lui-même fonction de la vitesse angulaire du levier de sortie 30.

Il en résulte des efforts d'amortissement Fa exercés sur les palettes mobiles 65 qui génèrent un couple d'amortissement sur le levier de sortie 30 et s'oppose au mouvement de ce levier de sortie 30. Ce couple d'amortissement est fonction de la vitesse de rotation du levier de sortie 30 à la puissance deux et limite la vitesse angulaire du levier de sortie 30.

La ou les ouvertures 67 et les palettes fixe(s) 66 et mobile(s) 65 peuvent être dimensionnées pour limiter la vitesse de rotation du levier de sortie 30 au moment de la rupture de la connexion fusible 50, et le cas échéant pour limiter les risques d'atteindre une butée dans un système de commande de vol.

La figure 5 illustre une telle situation dans un diagramme présentant le temps tps en abscisse. Une première courbe C1 illustre le déplacement d'une commande de vol 81 et une deuxième courbe C2 illustre la vitesse de rotation du levier de sortie 30.

Au moment de la rupture RUPT, le levier de sortie 30 effectue une rotation à une vitesse de rotation qui augmente jusqu'au moment SOM où le pilote stoppe son effort. Le dispositif d'amortissement fluidique 60 permet de limiter cette vitesse de rotation comparé à un actionneur usuel.

En outre, le dispositif d'amortissement fluidique 60 peut permettre d'éviter qu'une butée inférieure pp ou supérieure gp soit atteinte par la commande de vol 81.

Naturellement, la présente invention est sujette à de nombreuses variations quant à sa mise en oeuvre, toujours dans le cadre défini par les revendications. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention telle que définie par les revendications.

**Revendications**

1. Actionneur (1) muni d'un moteur (5) mettant en mouvement un arrangement de sortie (20), ledit actionneur (1) comprenant un levier de sortie (30), ledit actionneur (1) comprenant une connexion fusible (50) liant en rotation autour d'un axe de rotation (AX) ledit arrangement de sortie (20) et ledit levier de sortie (30) jusqu'à un seuil de couple mécanique, **caractérisé en ce que** ledit actionneur (1) comporte un dispositif d'amortissement fluidique (60) logé entre le levier de sortie (30) et l'arrangement de sortie (20) pour amortir une rotation autour dudit axe de rotation (AX) dudit levier de sortie (30) par rapport à l'arrangement de sortie (20) suite à une rupture de ladite connexion fusible (50).

2. Actionneur selon la revendication 1,
   **caractérisé en ce que** ledit actionneur (1) comporte une chambre (55) étanche remplie par un fluide (61) dudit dispositif d'amortissement fluidique (60), ladite chambre (55) s'étendant radialement au regard de l'axe de rotation (AX) entre l'arrangement de sortie (20) et une paroi (36) d'un logement (35) du levier de sortie (30).

3. Actionneur selon la revendication 2,
   **caractérisé en ce que** le dispositif d'amortissement fluidique (60) comporte au moins une palette fixe (66) solidaire en rotation de l'arrangement de sortie (20) et au moins une palette mobile (65) solidaire en rotation dudit logement (35), ladite au moins une palette fixe (66) et ladite au moins une palette mobile (65) étant agencées dans ladite chambre (55) et baignant dans ledit fluide (61).

4. Actionneur selon la revendication 3,
   **caractérisé en ce que** ladite au moins une palette fixe (66) est disposée dans une fente (27) dudit arrangement de sortie (20).

5. Actionneur selon l'une quelconque des revendications 3 à 4,
   **caractérisé en ce que** ladite au moins une palette fixe (66) et/ou ladite au moins une palette mobile (65) comporte au moins une ouverture (67) la traversant de part en part, ledit fluide (61) traversant ladite au moins une ouverture (67) lors d'une rotation du levier de sortie (30) relativement à l'arrangement de sortie (20).

6. Actionneur selon la revendication 5,
   **caractérisé en ce que** ladite au moins une ouverture (67) traverse de part en part ladite au moins une palette mobile (65) ou ladite au moins une palette fixe (66) selon une direction (DIR) tangente à un cercle centré sur l'axe de rotation (AX).

7. Actionneur selon l'une quelconque des revendications 5 à 6,
   **caractérisé en ce que** ladite au moins une ouverture (67) comprend une section qui s'étend radialement au regard dudit axe de rotation (AX).

8. Actionneur selon l'une quelconque des revendications 3 à 7,
   **caractérisé en ce que** ladite au moins une palette fixe (66) s'étend de l'arrangement de sortie (20) jusqu'à une extrémité libre fixe (660) séparée de ladite paroi (36) du logement (35) par un premier jeu radial (661), ladite au moins une palette mobile (65) s'étend de ladite paroi (36) jusqu'à une extrémité libre mobile (650) séparée de l'arrangement de sortie (20) par un deuxième jeu radial (651).

9. Actionneur selon l'une quelconque des revendications 3 à 8,
   **caractérisé en ce que** le dispositif d'amortissement fluidique (60) comporte au moins deux dites palettes fixes (66) et au moins deux dites palettes mobiles (65), chaque palette mobile (65) étant en azimut agencée entre deux palettes fixes (66) et chaque palette fixe (66) étant agencée en azimut entre deux palettes mobiles (65) au regard dudit axe de rotation (AX).

10. Actionneur selon l'une quelconque des revendications 2 à 9,
    **caractérisé en ce que** ledit logement (35) comporte un moyeu (36) fermé par un couvercle (40).

11. Actionneur selon l'une quelconque des revendications 2 à 10,
    **caractérisé en ce que** ledit levier de sortie (30) comporte au moins un bras (31) solidaire dudit logement (35).

12. Actionneur selon l'une quelconque des revendications 2 à 11,
    **caractérisé en ce que** ladite connexion fusible (50) comporte une goupille (51) fusible insérée dans un premier passage (52) dudit arrangement de sortie (20), ladite goupille (51) étant insérée dans un deuxième passage (53) dudit logement (35).

13. Véhicule (80),
    **caractérisé en ce que** ledit véhicule (80) comporte un actionneur (1) selon l'une quelconque des revendications 1 à 12.

14. Véhiculé selon la revendication 13,
    **caractérisé en ce que** ledit actionneur (1) est relié à une chaîne mécanique de commande de vol (85) qui s'étend d'une commande de vol (81) manoeuvrable par un pilote jusqu'à un organe de pilotage (83) du véhicule (80), un mouvement de l'organe de pilotage (83) sous l'impulsion de la commande de vol (81) engendrant un mouvement du véhicule (80).

**Patentansprüche**

1. Stellglied (1) mit einem eine Abtriebsanordnung (20) antreibenden Motor (5), wobei der Aktuator (1) einen Abtriebshebel (30) umfasst, wobei das Stellglied (1) eine Sicherungsverbindung (50) umfasst, die die Abtriebsanordnung (20) und den Abtriebshebel (30) bis zu einer mechanischen Drehmomentschwelle um eine Drehachse (AX) drehfest verbindet, **dadurch gekennzeichnet, dass** das Stellglied (1) eine Fluiddämpfungsvorrichtung (60) umfasst, die zwischen dem Abtriebshebel (30) und der Abtriebsanordnung (20) untergebracht ist, um eine Drehung um die Drehachse (AX) des Abtriebshebels (30) in Bezug auf die Abtriebsanordnung (20) infolge eines Bruchs der Sicherungsverbindung (50) zu dämpfen.

2. Stellglied nach Anspruch 1, **dadurch gekennzeichnet, dass** das Stellglied (1) eine dichte Kammer (55) aufweist, die mit einem Fluid (61) der Fluiddämpfungsvorrichtung (60) gefüllt ist, wobei sich die Kammer (55) in Bezug auf die Drehachse (AX) zwischen der Abtriebsanordnung (20) und einer Wand (36) einem Gehäuse (35) des Abtriebshebels (30) radial erstreckt.

3. Stellglied nach Anspruch 2, **dadurch gekennzeichnet, dass** die Fluiddämpfungsvorrichtung (60) mindestens ein festes Paddel (66), das drehfest mit der Abtriebsanordnung (20) verbunden ist, und mindestens ein bewegliches Paddel (65), das drehfest mit dem Gehäuse (35) verbunden ist, umfasst, wobei das mindestens eine feste Paddel (66) und das mindestens eine bewegliche Paddel (65) in der Kammer (55) angeordnet sind und in dem Fluid (61) baden.

4. Stellglied nach Anspruch 3, **dadurch gekennzeichnet, dass** das mindestens eine feste Paddel (66) in einem Schlitz (27) der Abtriebsanordnung (20) angeordnet ist.

5. Stellglied nach einem der Ansprüche 3 bis 4, **dadurch gekennzeichnet, dass** das mindestens eine feste Paddel (66) und/oder das mindestens eine bewegliche Paddel (65) mindestens eine Durchgangsöffnung (67) aufweist, wobei das Fluid (61) bei einer Drehung des Abtriebshebels (30) relativ zur Abtriebsanordnung (20) durch die mindestens eine Durchgangsöffnung (67) strömt.

6. Stellglied nach Anspruch 5, **dadurch gekennzeichnet, dass** die mindestens eine Öffnung (67) das mindestens eine bewegliche Paddel (65) oder das mindestens eine feste Paddel (66) in einer Richtung (DIR) durchquert, die tangential zu einem um die Drehachse (AX) zentrierten Kreis verläuft.

7. Stellglied nach einem der Ansprüche 5 bis 6, **dadurch gekennzeichnet, dass** die mindestens eine Öffnung (67) einen Abschnitt umfasst, der sich in Bezug auf die Drehachse (AX) radial erstreckt.

8. Stellglied nach einem der Ansprüche 3 bis 7, **dadurch gekennzeichnet, dass** sich das mindestens eine feste Paddel (66) von der Abtriebsanordnung (20) bis zu einem festen freien Ende (660) erstreckt, das von der Wand (36) des Gehäuses (35) durch ein erstes radiales Spiel (661) getrennt ist, und das mindestens eine bewegliche Paddel (65) sich von der Wand (36) bis zu einem beweglichen freien Ende (650) erstreckt, das von der Abtriebsanordnung (20) durch ein zweites radiales Spiel (651) getrennt ist.

9. Stellglied nach einem der Ansprüche 3 bis 8, **dadurch gekennzeichnet, dass** die Fluiddämpfungsvorrichtung (60) mindestens zwei der festen Paddel (66) und mindestens zwei der beweglichen Paddel (65) umfasst, wobei jedes bewegliche Paddel (65) azimutal zwischen zwei festen Paddeln (66) angeordnet ist und jedes feste Paddel (65) azimutal zwischen zwei beweglichen Paddeln (66) in Bezug auf die Drehachse (AX) angeordnet ist.

10. Stellglied nach einem der Ansprüche 2 bis 9, **dadurch gekennzeichnet, dass** das Gehäuse (35) eine Nabe (36) aufweist, die durch einen Deckel (40) verschlossen ist.

11. Stellglied nach einem der Ansprüche 2 bis 10, **dadurch gekennzeichnet, dass** der Abtriebshebel (30) mindestens einen Arm (31) aufweist, der fest mit dem Gehäuse (35) verbunden ist.

12. Stellglied nach einem der Ansprüche 2 bis 11, **dadurch gekennzeichnet, dass** die Sicherungsverbindung (50) einen Sicherungsstift (51) aufweist, der in einen ersten Durchgang (52) der Abtriebsanordnung (20) eingesetzt ist, wobei der Stift (51) in einen zweiten Durchgang (53) des Gehäuses (35) eingesetzt ist.

13. Verkehrsmittel (80), **dadurch gekennzeichnet, dass** das Verkehrsmittel (80) ein Stellglied (1) nach einem der Ansprüche 1 bis 12 aufweist.

14. Fahrzeug nach Anspruch 13, **dadurch gekennzeichnet, dass** das Stellglied (1) mit einer mechanischen Flugsteuerungskette (85) verbunden ist, die sich von einer von einem Piloten betätigbaren Flugsteuerung (81) bis zu einem Steuerorgan (83) des Verkehrsmittels (80) erstreckt, wobei eine Bewegung des Steuerorgans (83) unter dem Impuls der Flugsteuerung (81) eine Bewegung des Verkehrsmittels (80) hervorruft.

**Claims**

1. Actuator (1) provided with a motor (5) for moving an output arrangement (20), said actuator (1) comprising an output lever (30), said actuator (1) comprising a fusible connection (50) linking said output arrangement (20) and said output lever (30) such that they rotate about a axis of rotation (AX), up to a mechanical torque threshold,
   **characterized in that** said actuator (1) includes a fluid damper device (60) housed between the output lever (30) and the output arrangement (20) to dampen rotation about said axis of rotation (AX) of said output lever (30) relative to the output arrangement (20) following a rupture of said fusible connection (50).

2. Actuator according to Claim 1,
   **characterized in that** said actuator (1) includes a leak-proof chamber (55) filled with a fluid (61) of said fluid damper device (60), said chamber (55) extending radially with respect to the axis of rotation (AX) between the output arrangement (20) and a wall (36) of a housing (35) of the output lever (30).

3. Actuator according to Claim 2,
   **characterized in that** the fluid damper device (60) includes at least one fixed vane (66) in conjoint rotation with the output arrangement (20) and at least one movable vane (65) in conjoint rotation with said housing (35), said at least one fixed vane (66) and said at least one movable vane (65) being arranged in said chamber (55) and immersed in said fluid (61).

4. Actuator according to Claim 3,
   **characterized in that** said at least one fixed vane (66) is disposed in a slot (27) of said output arrangement (20).

5. Actuator according to any one of Claims 3 to 4,
   **characterized in that** said at least one fixed vane (66) and/or said at least one movable vane (65) has at least one opening (67) passing through it completely, said fluid (61) passing through said at least one opening (67) when the output lever (30) rotates relative to the output arrangement (20).

6. Actuator according to Claim 5,
   **characterized in that** said at least one opening (67) passes through said at least one movable vane (65) or said at least one fixed vane (66) in a direction (DIR) that is tangential to a circle centred on the axis of rotation (AX).

7. Actuator according to any one of Claims 5 to 6,
   **characterized in that** said at least one opening (67) comprises a section that extends radially with respect to said axis of rotation (AX).

8. Actuator according to any one of Claims 3 to 7,
   **characterized in that** said at least one fixed vane (66) extends from the output arrangement (20) to a fixed free end (660) spaced apart from said wall (36) of the housing (35) by a first radial clearance (661), said at least one movable vane (65) extends from said wall (36) to a movable free end (650) spaced apart from the output arrangement (20) by a second radial clearance (651).

9. Actuator according to any one of Claims 3 to 8,
   **characterized in that** the fluid damper device (60) includes at least two said fixed vanes (66) and at least two said movable vanes (65), each movable vane (65) being arranged between two fixed vanes (66) in azimuth, and each fixed vane (66) being arranged between two movable vanes (65) in azimuth with respect to said axis of rotation (AX).

10. Actuator according to any one of Claims 2 to 9,
    **characterized in that** said housing (35) comprises a hub (36) closed by a cover (40).

11. Actuator according to any one of Claims 2 to 10,
    **characterized in that** said output lever (30) comprises at least one arm (31) integral with said housing (35).

12. Actuator according to any one of Claims 2 to 11,
    **characterized in that** said fusible connection (50) comprises a fusible pin (51) inserted into a first passage (52) of said output arrangement (20), said pin (51) being inserted into a second passage (53) in said housing (35).

13. Vehicle (80),
    **characterized in that** said vehicle (80) comprises an actuator (1) according to any one of Claims 1 to 12.

14. Vehicle according to Claim 13,
    **characterized in that** said actuator (1) is connected to a flight control linkage (85) that extends from a pilot-operable flight control (81) to a control member (83) of the vehicle (80), a movement of the control member (83) under drive from the flight control (81) causing a movement of the vehicle (80).

# Fig.1

# Fig.2

**Fig.3**

# Fig.4

# Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2931131 A1
- FR 2931131
- FR 3008457
- US 20100203974 A
- EP 1506354 A
- EP 2266878 A
- EP 3702278 A